# EUROPEAN PATENT APPLICATION

(11) **EP 0 920 173 A2**
(43) Date of publication of application: **02.06.1999**
(21) Application number: 98309153.9
(22) Date of filing: 09.11.1998
(51) Int. Cl.: H04M 3/42, H04M 3/50, H04M 3/40, G10L 3/00

(54) **Enhanced telecommunications network**

(30) Priority: 25.11.1997 US 978139
(71) Applicant: AT&T Corp., New York, NY 10013-2412 (US)
(72) Inventor: Narayanan, Shrikanth S., Riverside, Connecticut 06878 (US); Potamianos, Alexandros, Westfield, New Jersey 07090 (US); Rahim, Mazin G., Matawan, New Jersey 07747 (US); Wilpon, Jay G., Warren, New Jersey 07060 (US); Zeljkovic, Ilija, Westfield, New Jersey 07090 (US)
(74) Representative: Asquith, Julian Peter

(57) **Abstract**

A system deployed in a telecommunications network includes a terminal device (12), a telephone network switch (10), a network service, and an optional network database. The terminal device (12) measures, stores, and transmits to the network service data characterizing the terminal device (12), an acoustic environment, and optionally data characterizing the speech of a local population. These data can be stored in the network database facilitating long-term adaptation of the network service.

## Description

### Field of the Invention

This invention relates generally to a telecommunications network system, and more particularly to a system which automatically measures, stores, and transmits data characterizing a terminal device and its acoustic environment in a telecommunications network.

### Background of the Invention

Voice-enabled network services are becoming increasingly commercially important. Such network services often employ or rely upon speech recognition techniques. Speech recognition is a process by which an unknown speech utterance (usually in the form of a digital PCM signal) is transcribed into words or phonemes. Generally, speech recognition is performed by comparing the features of an unknown utterance to the features of known words or word strings.

The features of known words or word strings are determined with a process known as "training". Through training, one or more samples of known words or strings (training speech) are examined and their features (or characteristics) recorded as reference patterns (or recognition models) in a database of a speech recognizer. Typically, each recognition model represents a single known word. However, recognition models may represent speech of other lengths such as subwords (e.g., phones, which are the acoustic manifestation of linguistically-based phonemes). Recognition models may be thought of as building blocks for words and strings of words, such as phrases or sentences.

To recognize an utterance in a process known as "testing", a speech recognizer extracts features from the utterance to characterize it. The features of the unknown utterance are referred to as a test pattern. The recognizer then compares combinations of one or more recognition models in the database to the test pattern of the unknown utterance. A scoring technique is used to provide a relative measure of how well each combination of recognition models matches the test pattern. The unknown utterance is recognized as the words associated with the combination of one or more recognition models that most closely matches the unknown utterance.

Hidden Markov model (HMM) recognizers are a class of recognizers trained using both first and second order statistics (i.e., spectral means and variances) of known speech samples. Each recognition model in this type of recognizer is an N-state statistical model (an HMM) which reflects these statistics. Each state of an HMM corresponds in some sense to the statistics associated with the temporal events of samples of a known word or subword. An HMM is characterized by a state transition matrix, A (which provides a statistical description of how new states may be reached from old states), and an observation probability matrix, B (which provides a description of which spectral features are likely to be observed in a given state). Scoring a test pattern reflects the probability of the occurrence of the sequence of features of the test pattern given a particular model. Scoring across all models may be provided by efficient dynamic programming techniques, such as Viterbi scoring. The HMM or sequence thereof which indicates the highest probability of the sequence of features in the test pattern occurring identifies the test pattern.

While the testing and/or training utterances can come from various types of acoustic environments, each acoustic environment (e.g., an age, a sex, a microphone type, a room configuration, etc.) produces distortion and acoustic artifacts which are characteristic of the acoustic environment. Generally, a speech signal transmitted through a telephone (or other type of) channel often encounters unknown variable conditions which significantly degrade the performance of HMM-based speech recognition systems. Undesirable components are added to the communicative portion of the signal due to ambient noise and channel interference, as well as from different sound pick-up equipment and articulatory effects. Ambient noise is considered to be additive to a speech signal, while channel interference is considered to be convolutional to the speech signal. The spectrum of a real noise signal, such as that produced from fans and motors, is generally not flat and can degrade speech recognition system performance. Channel interference, which can be linear or non-linear, can also degrade speech recognition performance. A typical conventional telephone channel effectively band-pass filters a transmitted signal between 200 Hz and 3200 Hz, with variable attenuations across the different spectral bands. The use of different microphones, in different environmental conditions, for different speakers from different geographic regions, with different accents, speaking different dialects can create an acoustic mismatch between the speech signals encountered in testing and the recognition models trained from other speech signals.

Specifically, it should be noted that the transfer function of the terminal device is one of the major sources of channel mismatch, and the predominant one in a fully digital communication network. In many cases, however, background noise around the terminal device is the dominant source of speech recognition errors. This is especially true for public telephones and telephones located in industrial environments.

A major hurdle in the successful deployment of voice-enabled telephone services based on automatic speech recognition (ASR) is the inability of the technology to successfully cope with varying transmission-channel and terminal-device characteristics, far-end environmental noise conditions, and the speech characteristics of the local population such as language accents. If these characteristics are unknown to (i.e., unmodeled by) a speech recognizer, performance of the speech recognizer degrades dramatically. Acoustic mismatch between training and testing conditions can also result in a significant performance degradation of the speech recognizer.

Various strategies have been proposed for increasing the robustness of automatic speech recognition systems in order to reduce the mismatch between training and testing conditions. Various blind deconvolution and bias removal schemes (e.g., cepstral mean normalization) have been developed in an attempt to address this problem of mismatch at the utterance or word level, but further improvements and enhancements are still necessary.

Because varying far-end environmental noise conditions and transmission channel and terminal device characteristics cause particular associated distortion and acoustic artifacts, if the nature and source of the distortion and acoustic artifacts can be determined then such distortion and acoustic artifacts can be canceled. By determining data characterizing the nature and source of distortion and acoustic artifacts in a speech signal processed in a telecommunications network, the distortion and acoustic artifacts can be removed from the speech signal. This capability would enhance the quality of the speech transmitted and received in the telecommunications network.

### Summary of the Invention

The present invention advances the state of the art directed to solving the aforementioned problems by providing a system for use in a telecommunications network which automatically measures, stores, and transmits to a network service data which characterize a terminal device, the acoustic environment of the terminal device, and users of the terminal device.

In a first illustrative embodiment of the invention, the system includes a terminal device which measures and stores a first set of data indicating its own physical characteristics and that of its local acoustic environment and transmits the first set of data to a network service for applications such as speech recognition, speech quality improvement, etc. A precomputed second set of data characterizing the speech of a local population is optionally stored in the terminal device and can be transmitted to the network service. When a call is made from the terminal device to a switch, the first set of data describing the transfer characteristic of the terminal device and the noise characteristics of the ambient acoustic environment and the second set of data describing the speech characteristics of a local population are transferred from the switch to the network service.

In a second illustrative embodiment of the invention, the sets of data are also stored in a network database accessible to network adjuncts such as speech recognizers and voice quality improvement devices. The sets of data stored in the network database are tagged by the telephone number (or ANI) for service customization through device, channel, and/or population-specific modeling and adaptation.

Other features and advantages of the invention will become apparent from the following detailed description, taken in conjunction with the accompanying drawings, which illustrate, by way of example, the features of the invention.

### Brief Description of the Drawing

In the drawing:
FIG. 1 is a schematic representation of a system in accordance with a first embodiment of the invention;
FIG. 2 is a schematic representation of a system in accordance with a second embodiment of the invention;
FIG. 3 is a process flow diagram for describing updating data stored in a terminal device which characterizes the transfer function of the terminal device;
FIG. 4 is a process flow diagram for describing updating data stored in a terminal device which characterizes the acoustic environment of the terminal device;
FIG. 5 is a process flow diagram for describing operation of a system in response to a call in accordance with the principles of the invention; and
FIG. 6 is a process flow diagram for describing operation of a system in response to a call in accordance with the principles of the invention.

### Detailed Description of the Invention

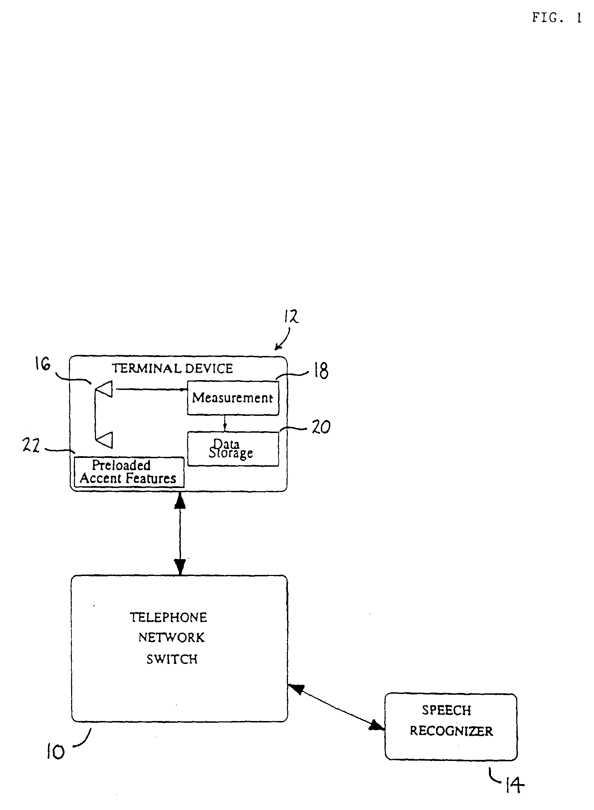

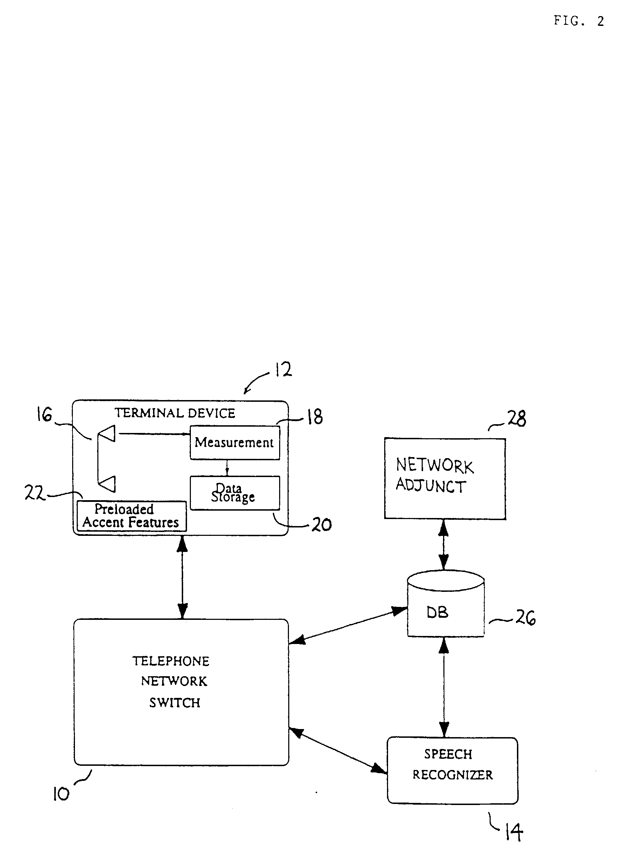

For a better understanding of the invention, together with other and further objects, advantages, and capabilities thereof, reference is made to the following disclosure and the figures of the drawing, where like reference characters designate like or similar elements. For clarity of explanation, the illustrative embodiments of the present invention are presented as comprising individual functional blocks. The functions these blocks represent may be provided through the use of either shared or dedicated hardware, including, but not limited to, hardware capable of executing software. For example, the functions of the blocks presented in FIGS. 1 and 2 may be provided by a single shared processor. Illustrative embodiments may comprise digital signal processor (DSP) hardware, read-only memory (ROM) for storing software performing the operations discussed below, and random-access memory (RAM) for storing DSP results. Very large scale integration (VLSI) hardware embodiments, as well as custom VLSI circuitry (an application specific integrated circuit, ASIC) in combination with a general purpose DSP circuit, may also be provided.

A system for use in a telecommunications network is shown and described in the drawing figures for purposes of illustration. The system automatically measures terminal device characteristics and background acoustic environmental conditions to enable use of that information by a voice-enabled network service, such as a speech recognizer. Knowledge of the device and background characteristics helps to alleviate the effects of the acoustic mismatch between training and testing conditions, thereby obtaining improved speech recognition performance. Data characterizing the speech accent of a local population are used to adapt the system to the local population. Additionally, a network database optionally stores the data characterizing the terminal device and the background environment and the data characterizing the speech accent, tagged by the telephone number of the terminal device, to aid, for example, long-term adaptation and model improvement.

A system deployed in a telecommunications network in accordance with a first embodiment of the invention is shown in FIG. 1. The telecommunications network can be embodied within, for example, a plain old telephone service (POTS) network or a network of computers such as the Internet or the World Wide Web. Referring to FIG. 1, the system includes a telephone network switch 10, a terminal device 12 coupled to the telephone network switch 10 by wireline or wireless connection, and a speech recognizer 14 (deployed, for example, as or within the voice-enabled network service) coupled to the telephone network switch 10 to transmit and receive data to and from the telephone network switch 10. By way of example, the terminal device 12 can be a telephone, a portable cellular telephone, an automobile telephone, a voice-enabled laptop or palmtop computer, a personal digital assistant (PDA) with a wireless modem, a TDMA or CDMA transceiver, or other, perhaps larger, voice communicating devices. The terminal device 12 may be deployed, for example, in a residence, in a business, as a public telephone, or as a cellular telephone. In this specific embodiment the terminal device 12 includes a telephone handset 16 which includes a microphone, a measurement processor 18 coupled to the handset 16 which measures microphone, environmental noise characteristics and optionally speaker characteristics, a data storage device 20 such as a random-access memory coupled to the measurement processor 18 which stores such data, and preloaded accent features 22 reflecting a local regional accent stored in a data storage device such as a read-only memory.

The system depicted in FIG. 1 automatically measures, stores, and transmits data characterizing the terminal device 12, users of the terminal device 12, and the ambient acoustic environment of the terminal device 12 to a voice-enabled network service (e.g., the speech recognizer 14) deployed in the telecommunications network. The terminal device 12 measures and stores the transfer characteristic of the microphone and the ambient noise of the local environment. The system makes the transfer characteristic of the microphone and the background noise (or characteristics thereof) available to the network service at the time of the call connection. This information can also be made available to the network at any time as part of an established protocol. The system may optionally update the transfer characteristic of the microphone and/or the ambient noise present in the local environment. Additionally, the system optionally is able to modify the precomputed speech characteristics 22 of the local population stored in the terminal device 12 (or optionally in the network speech recognizer 14). Examples of features provided or employed by the network service include speech recognition and speech quality improvement.

FIG. 2 illustrates a second embodiment of the system deployed in a telecommunications network according to the invention, which introduces a network database as an additional system component. Referring to FIG. 2, the system includes a telephone network switch 10. A terminal device 12 is coupled to the telephone network switch 10 by a wireline or wireless connection. A voice-enabled network service such as, for example, a speech recognizer 14 is communicatively coupled to the telephone network switch 10. When a call is made from the terminal device 12 in order to use the network service, the call is routed to the telephone network switch 10 while the data measured by and stored within the terminal device 12 is forwarded to the telephone network switch 10. Upon connection of the call to the network switch 10, the switch 10 accesses the network service (i.e., speech recognizer 14) with the data. A network database ("DB") 26 is coupled to the telephone network switch 10 and to the speech recognizer 14. The network database 26 receives the data and ANI (or other indicia of the telephone number of the terminal device 12) from the telephone network switch 10 or the speech recognizer 14, and stores such data associated with the ANI to be accessible to a network adjunct 28, such as a speech recognizer or voice quality improvement device, and other network components.

The terminal device 12 initiates the call which is routed to the telephone network switch 10. In response to the call and determining from the telephone number dialed or another event or condition indicating that the speech recognizer 14 will be used in the processing of the call, the telephone network switch 10 (i) transfers the data and ANI to the speech recognizer 14 and (ii) transfers the ANI and the data corresponding to the ANI to the network database 26.

The speech recognizer 14 processes the data received from the telephone network switch 10 responsive to the call being routed to the telephone network switch 10. The speech recognizer 14 is able to access the network database 26 to enhance processing of the data. If the data received from the telephone network switch 10 is deemed unreliable, or if data expected by the speech recognizer 14 is non-existent, then the speech recognizer 14 can launch a query, which includes an ANI corresponding to the terminal device 12, to the network database 26 to recover substitute or additional data usable in speech recognition.

Referring to FIG. 2, the first set of measured data stored in the data storage memory 20 and the second set of preloaded data 22 are also stored in the network database 26 so that such data are accessible to the network adjunct 28. These data are useful for improving the quality of the network service provided to existing telephones that are not equipped with the hardware taught herein. The network database 26 according to the second embodiment of the invention will be helpful for large-scale statistical modeling of device and channel types, speaker populations, and environmental conditions.

If the microphone characteristics stored in data storage memory 20 of terminal device 12 change over time, the measurement processor 18 controls an in-terminal measurement circuitry to play a short pulse and/or a white noise signal into the microphone of the handset 16, and measures the microphone's response to compute the microphone's characteristic transfer function. The measurement processor 18 performs this update automatically after a prescribed time period. A lower update rate can be selected if the microphone characteristics do not change over time rapidly.

Samples of the acoustic environmental conditions are obtained at frequent intervals, regular or random, by the measurement processor 18, when the device is not being used by a customer, to determine the noise characteristics (or noise itself) which are stored in the terminal device 12. Additional signal processing circuitry can be installed to compute the statistical characteristics of the noise signal, which can also be stored in the memory 20.

The features 22 of a spoken accent of a local population are preloaded into the terminal device 12 at the time of installation. The particular features 22 vary depending on the specific geographical region. The initial off-line accent information is derived from the transcribed (i.e., recognized) speech of the local population (known phonetical content of the speech). Updating of the characteristics is performed by the terminal device 12, and can be optionally updated with data from the speech recognizer 14. Adaptation of the accent parameters is performed mainly from the confirmed speech content. For example, when a system user speaks an account number and later confirms it.

The measurement processor 18 has signal processing capabilities to extract device and noise characteristics; for example, it can build a hidden Markov model (HMM) of noise, or it can store the raw noise signal. The HMM or the noise signal is then made available to the speech recognizer 14 which will build corresponding models and/or adapt the existing models. Transmission of this information to the speech recognizer 14 is carried out based on a standard protocol, for example, during the time when a call is being set-up along with the standard signaling. Updates can be transmitted from the network speech recognizer 14 back to the terminal device 12 to adjust data stored therein.

The device and background information stored in the network database 26 is tagged with the ANI (or telephone number) corresponding to the terminal device 12. If during a speech recognition process any of the necessary or desired data describing the terminal device, background noise, or user is unavailable from the terminal device 12 or deemed unreliable by the speech recognizer 14, then substitute device, background, or user characteristics can be obtained as appropriate from the network database 26 using the incoming telephone number as a key. Such information enables (statistical cluster) categorization based on geography (i.e., corresponding to area code), device types, and background types and facilitates long-term adaptation.

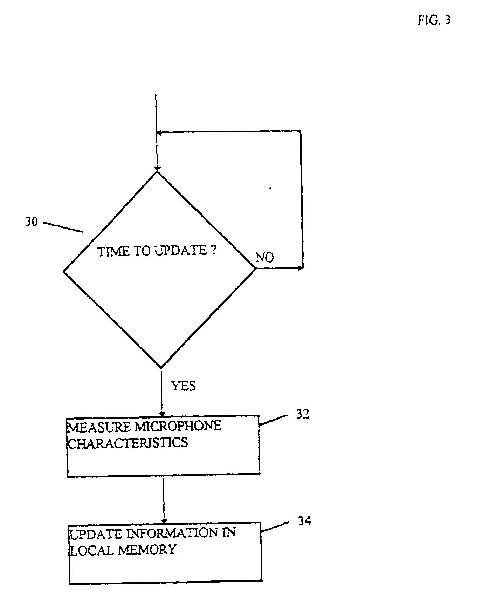

A process flow diagram for describing measurement and storage of microphone characteristics by a system deployed in a telecommunications network in accordance with the principles of the invention is shown in FIG. 3. According to the process depicted in FIG. 3, the system determines if it is time to update the microphone characteristics in step 30. If no, then the step is repeated. If yes, the microphone characteristics are measured by the measurement processor in step 32. Then the measurement processor updates the information in the local memory in the terminal device in step 34.

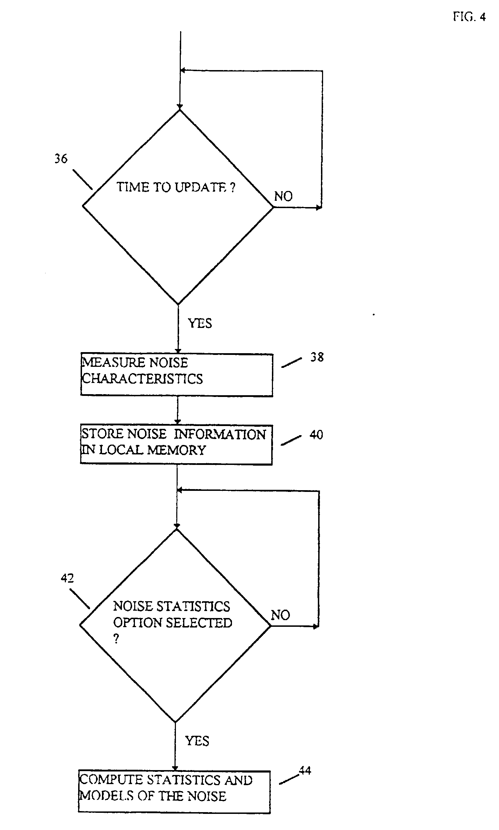

A process flow diagram for describing measurement and storage of data characterizing the acoustic environment of an end-device by the system in accordance with the principles of the invention is shown in FIG. 4. According to the process depicted in FIG. 4, the system determines if it is time to update the noise characteristics in step 36. If no, the step is repeated. If yes, the noise characteristics of the acoustic environment are measured by the measurement processor in step 38. Then the noise information is stored in the local memory in the terminal device in step 40. Then, in step 42 the system determines whether the option for computing noise statistics has been selected. If no, the system repeats the step. If yes, statistics and models of the noise are computed by the system in step 44.

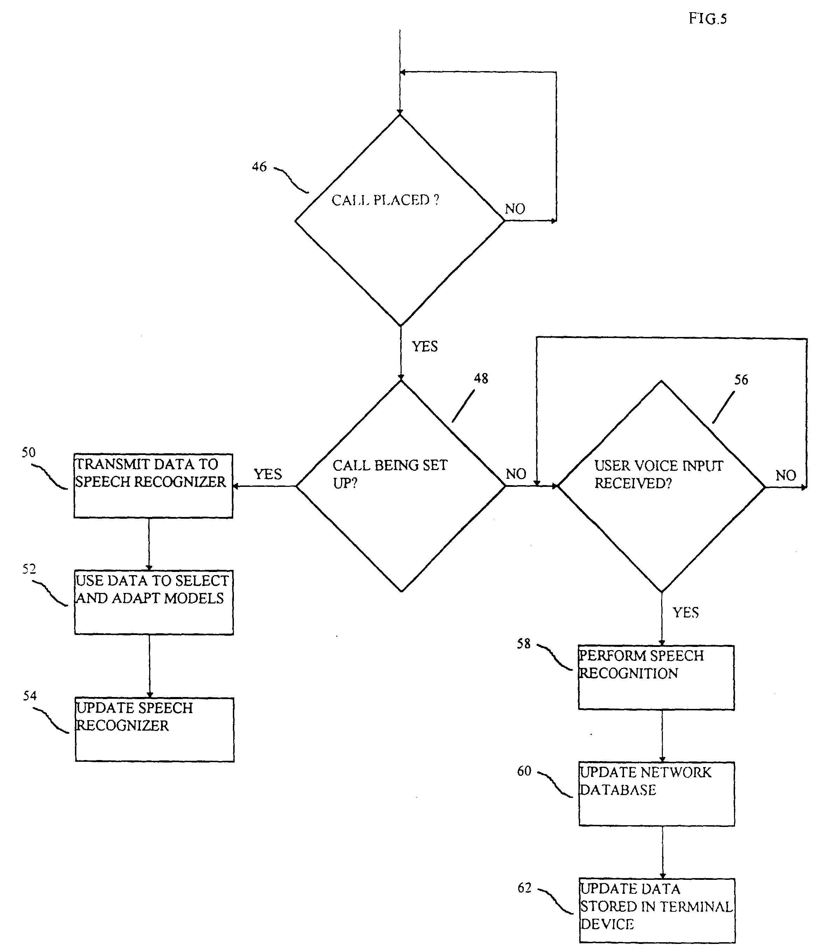

A process flow diagram for describing a sequence of actions performed by the system according to the principles of the invention during a call to a voice-enabled network service that accommodates unknown far-end microphone and noise conditions is shown in FIG. 5. Referring to FIG. 5, the system determines if a call has been placed in step 46. If no, the step is repeated. If yes, then the system determines whether the call is being set up in step 48.

If the system determines in step 48 that the call is being set up, then information characterizing the transfer function of the microphone, information characterizing the measured ambient noise, and ANI (or other information representing the origin of the call) are transmitted to the network speech recognizer in step 50. Then, these data are used by the network speech recognizer in step 52 to perform microphone-specific and noise-specific selection and/or adaptation of the recognition models. The system then updates the speech recognizer and/or the voice quality enhancement device in step 54. Steps 50-54 can be performed while the call is being set up. Call set up can include, by way of example, a transfer of voice data, signaling, and transferring the associated ANI, the telephone number being called and other information.

After the system determines in step 48 that the call is no longer being set-up, the system determines in step 56 whether user voice input has been received. If no, the system repeats the step. If yes, speech recognition and/or voice quality enhancement are performed by the network service in step 58. The system updates the network database in step 60 based on the network service performed. In step 62, the system updates the local noise and/or accent characteristics stored in the terminal device based on the results of speech recognition and/or voice quality enhancement.

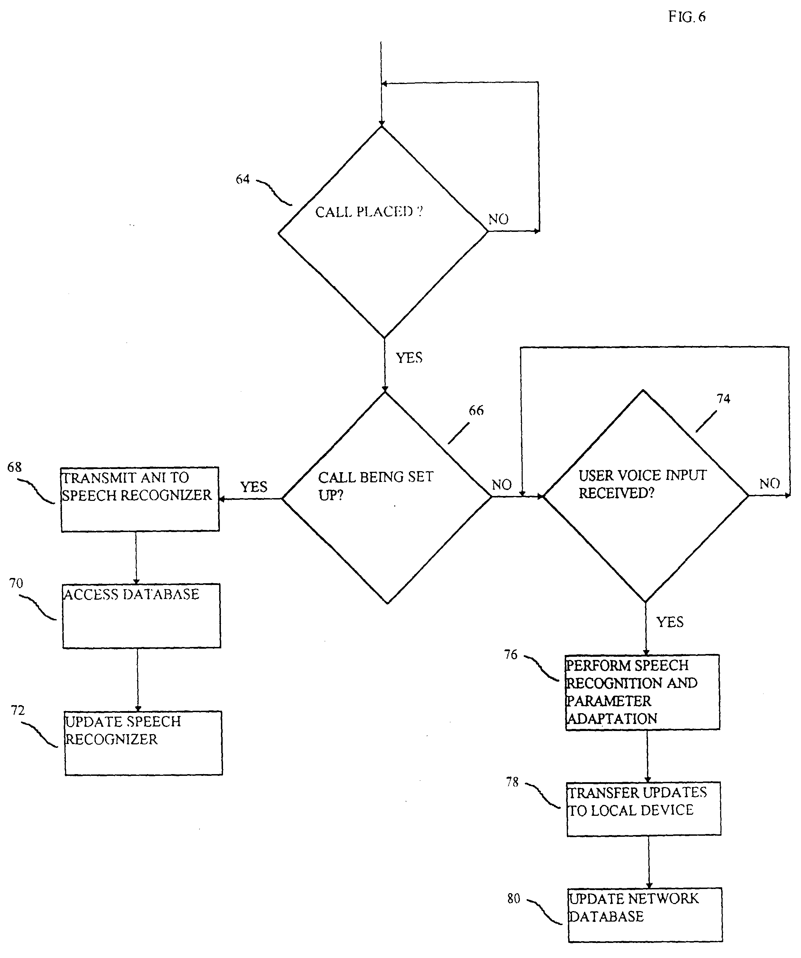

A process flow diagram for describing the system adapting to the dialectal characteristics of a local regional population in accordance with the principles of the invention is depicted in FIG. 6. Referring to FIG. 6, the system determines whether a call has been placed in step 64. If no, the step is repeated. If yes, the system determines whether the call is being set up in step 66. Call set up can include, for example, standard signaling, transfer of ANI and the telephone number being called, and transfer of voice data. If the system determines in step 66 that the call is being set up, the ANI associated with the call (or other information associated with the call) is transmitted to the speech recognizer in step 68. The speech recognizer performs a database look-up by querying the network database or a database associated with the speech recognizer to access region-specific recognition models corresponding to the local population in step 70. The speech recognizer is updated in step 72 based on the results of the query to more closely reflect the speech of the local population. The system can perform steps 68-72 while the call is being set up.

After the system determines that the call is no longer being set-up in step 66, the system determines whether user voice input has been received in step 74. If no, the step is repeated. If yes, the speech recognizer performs speech recognition and/or adaptation of the recognition model parameters in step 76. Updates are optionally transferred to the local device in step 78. The network database is updated in step 80.

Since the problem of acoustic mismatch affects such a wide range of speech processing technology and applications, the invention is also applicable to speaker verification, speaker recognition, topic/word spotting, and language identification.

While several particular forms of the invention have been illustrated and described, it will also be apparent that various modifications can be made without departing from the spirit and scope of the invention.

## Claims

1. A method for use in a telecommunications network, comprising the steps of:
determining a first set of data characterizing a terminal device and an acoustic environment in response to a call;
connecting the call to a switch and transmitting the first set of data to the switch; and
accessing a network service with the first set of data.

2. A method as defined in claim 1, wherein:
the accessing step comprises the step of providing the first set of data to a speech recognizer.

3. A method as defined in claim 1, wherein:
the accessing step comprises the step of providing the first set of data to a voice quality enhancement device.

4. A method as defined in claim 1, wherein:
the determining step comprises the step of measuring the transfer characteristic of a microphone in the terminal device.

5. A method as defined in claim 1, wherein:
the determining step comprises the step of measuring ambient noise affecting the terminal device.

6. A method as defined in claim 5, further comprising the step of:
transferring a measurement of the noise to the network service upon connecting the call to the switch.

7. A method as defined in claim 1, further comprising the step of:
storing in the terminal device a second set of data characterizing a spoken accent of a local population.

8. A method as defined in claim 1, further comprising the step of:
storing in the terminal device a second set of data characterizing a dialect of a local population.

9. A method as defined in claim 7, further comprising the step of:
transferring the second set of data to the network service upon connecting the call to the switch.

10. A method as defined in claim 1, further comprising the step of:
storing the first set of data in a network database.

11. A method as defined in claim 10, wherein:
the network database is accessible to a query from a network adjunct.

12. A method as defined in claim 11, wherein:
the network adjunct is coupled to the network database through the telecommunications network.

13. A method as defined in claim 1, further comprising the step of:
updating one or more parameters of the network service.

14. A method as defined in claim 13, further comprising the step of:
transferring updates from the network service to the terminal device.

15. A system for use in a telecommunications network, comprising: a switch;
a terminal device coupled to the switch which can make a call to the switch;
a first set of data stored within the terminal device characterizing the terminal device and an acoustic environment; and
a speech recognizer coupled to the switch, which is accessed by the switch and receives the first set of data from the switch upon connection of the call to the switch.

16. A system as defined in claim 15, wherein:
the terminal device determines the first set of data.

17. A system as defined in claim 15, wherein the terminal device comprises:
a telephone handset which includes a microphone,
a measurement processor coupled to the telephone handset which measures a transfer function of the microphone, and
a memory coupled to the measurement processor for storing data.

18. A system as defined in claim 17, further comprising:
a second set of data stored within the terminal device characterizing a spoken accent of a local population.

19. A system as defined in claim 17, further comprising:
a second set of data stored within the terminal device characterizing a dialect of a local population.

20. A system as defined in claim 15, further comprising:
a network database coupled to the switch and to the speech recognizer.

21. A system as defined in claim 20, wherein:
the terminal device transfers ANI to the switch upon connection of the call to the switch; and
the network database stores the first set of data in association with the ANI.

22. A system as defined in claim 21, wherein:
the speech recognizer queries the network database in response to the call.

23. A system as defined in claim 15, wherein:
the terminal device is coupled to the switch by a wireline connection.

24. A system as defined in claim 15, wherein:
the terminal device is coupled to the switch by a wireless connection.
